Europäisches Patentamt

European Patent Office

Office européen des brevets

(11) Publication number: **0 242 078**
**A2**

(12) **EUROPEAN PATENT APPLICATION**

(21) Application number: 87302733.8

(22) Date of filing: 30.03.87

(51) Int. Cl.4: **G11B 7/24** ,
//G11B7/007,G11B7/09

(30) Priority: 31.03.86 JP 71089/86

(43) Date of publication of application:
21.10.87 Bulletin 87/43

(84) Designated Contracting States:
DE FR GB IT NL

(71) Applicant: **CANON KABUSHIKI KAISHA**
**30-2, 3-chome, Shimomaruko**
**Ohta-ku Tokyo(JP)**

(72) Inventor: **Shibata, Takehiko**
**16-61, Hiyoshi-cho 3-chome**
**Kokubunji-shi Tokyo(JP)**

(74) Representative: **Beresford, Keith Denis Lewis**
**et al**
**BERESFORD & Co. 2-5 Warwick Court High**
**Holborn**
**London WC1R 5DJ(GB)**

(54) Optical information recording medium having tracking tracks and pre-format signals pre-recorded thereon.

(57) Tracking tracks (1) are preformed side by side and a pre-format area carries pre-format signals (2). A recording area (5) in which additional recording of information is possible is between the tracking tracks. The tracking tracks (1) are in the form of dis-continuous lines. The pre-format signals (2) are in the zones of discontinuity in the areas otherwise reserved for the additional information.

## FIG. 3

## Optical Information Recording Medium Having Tracking Tracks and Pre-Format Signals Pre-Recorded Thereon

### BACKGROUND OF THE INVENTION

#### Field of the Invention

This invention relates to an optical information recording medium capable of additionally recording information and reproducing the recorded information by application of a light beam thereto, and in particular to an optical information recording medium having tracking tracks for detecting tracking signals and pre-format signals pre-recorded thereon.

#### Related Background art

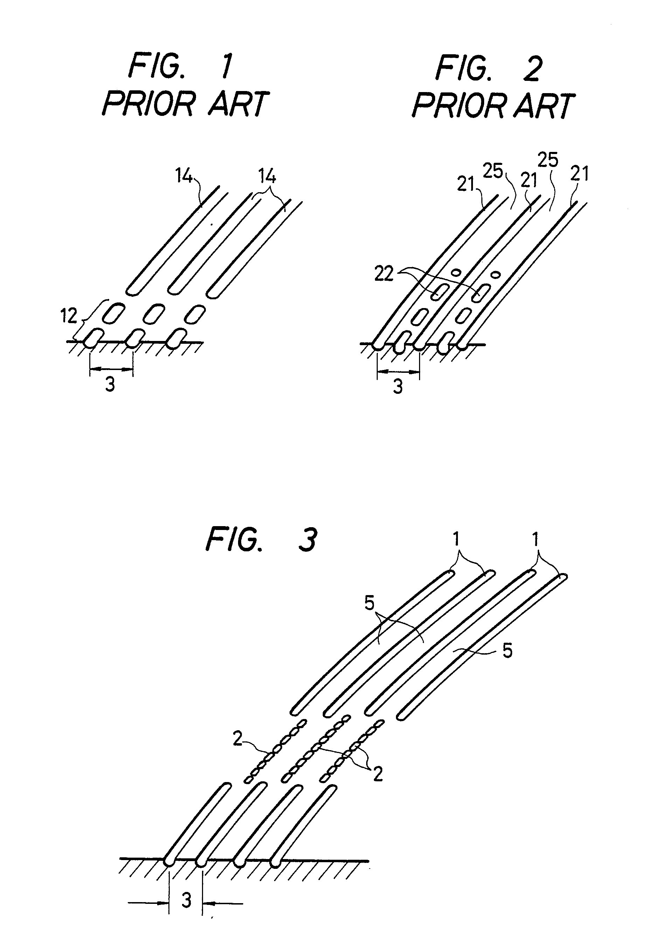

In an optical information recording medium such as a postscript type optical disc or a rewriting type optical disc, it has heretofore been usual that tracking tracks for detecting tracking signals and pre-format signals (signals into which address information or the like is pre-written) are pre-recorded thereon. An example of such an optical recording medium according to the prior art will hereinafter be described with reference to Figures 1 and 2 of the accompanying drawings. Figures 1 and 2 are schematic perspective views partly in cross-section showing the formating in the medium according to the prior art, Figure 1 showing the A type described below and Figure 2 showing the B type described below.

(A) As shown in Figure 1, intermittent pre-grooves (tracking tracks pre-formed in the form of grooves) 14 are disposed side by side, and pre-format pits 12 showing the aforementioned pre-format signals are formed on the same lines in the lengthwise direction of the pre-grooves 14. When information is to be additionally recorded, a light beam scans right above the pre-grooves 14 and pre-format pits 12, whereby information is recorded inside the pre-grooves 14.

(B) As shown in Figure 2, pre-grooves 21 in the form of continuous lines are disposed side by side, and pre-format pits 22 are formed in the portions between these pre-grooves 21 in a direction perpendicular to the lengthwise direction of tracks. When information is to be additionally recorded, the pre-grooves 21 are scanned by a light beam in such a manner that the end of the light beam lies on these pre-grooves 21, and information is recorded on the other areas (recording areas) 25 between the pre-grooves except for the areas in which the pre-format pits 22 are formed (pre-format areas).

However, as far as the A type described above is concerned, there is a problem that the optical depths of the pre-grooves 14 and pre-format pits 12 for tracking servo signals obtained by a laser beam spot being applied to the pre-grooves 14 and pre-format signals obtained from the pre-format pits 12 to become maximum are not coincident with each other. That is, when the wavelength of the laser beam is $\lambda$, the depth of $\lambda/8$ is optimum for the former and the depth of $\lambda/4$ is optimum for the latter, but under the present situation, the depth in the vicinity of $\lambda/8$ is adopted as a compromise between the two from the limitations in the manufacture of optical discs.

On the contrary, in the B type, during the manufacture of an original disc which is a medium, the pre-grooves 21 and the pre-format pits 22 are formed at different locations by discrete means and therefore, the former can be made to have the depth of $\lambda/8$ and the latter can be made to have the depth of $\lambda/4$, whereby the signals obtained by the application of a laser beam can be made maximum.

Again in the B type, however, the pre-grooves 21 are formed in the form of continuous lines and therefore, when they are scanned by a light beam, tracking servo signals always mix with the detecting light beam (the light of the light beam transmitted through or reflected by the medium), and when the other signals (for example, pre-format signals) than the tracking servo signals are to be detected, a crosstalk occurs between these signals, and this has led to a problem that the S/N ratio (the signal-noise ratio) is reduced.

Also, to make the recording capacity of a recording medium as great as possible, it is preferable that the pitch 3 between adjacent tracks be as small as possible, and at present, such pitch is of the order of 1.6 μm. Accordingly, in the case of the B type, the aforementioned pre-grooves 21 and pre-format pits 22 must be formed within this pitch of 1.6 μm. In this case, the depths of these pre-grooves and pre-format pits can be optimized, but as regards the widths of them, there has been a problem that they cannot be discretely optimized because the reading laser beam diameter (determined by the wavelength of the laser and the NA value of the objective lens) is practically as great as 1.0-1.5 μm (at the point of $1/e^2$).

## SUMMARY OF THE INVENTION

It is the object of the present invention to solve the above-noted problems peculiar to the prior art and to provide an optical information recording medium in which the crosstalk between detecting signals is decreased to enable signal detection of a high S/N ratio to be accomplished.

The above object of the present invention is achieved by forming, in an optical information recording medium on which tracking tracks for detecting tracking signals are performed side by side and which has a pre-format area pre-carrying pre-format signals and a recording area in which additional recording of information is possible, between said tracking tracks in a direction perpendicular to the lengthwise direction of the tracks, said tracking tracks so that they are in the form of continuous lines in at least the section thereof adjacent to said recording area and have portions discontinuous in the lengthwise direction of the tracks in the other section than said section.

## BRIEF DESCRIPTION OF THE DRAWINGS

Figures I and 2 show schematic perspective views partly in cross-section showing examples of the construction of an optical information recording medium according to the prior art.

Figure 3 shows a schematic perspective view partly in cross-section showing the construction of an embodiment of the optical information recording medium of the present invention.

Figure 4 shows a graph showing the variations of the pre-format signal outputs in the mediums of the present invention and the prior art for the shift amount of a light beam.

## DESCRIPTION OF THE PREFERRED EMBODIMENT

An embodiment of the present invention will hereinafter be described in detail with reference to the drawings.

Figure 3 shows a schematic perspective view partly in cross-section showing the construction of an embodiment of the optical information recording medium of the present invention, and corresponds to Figure 2 which shows an example of the prior art. In Figure 3, reference numeral I designates pre-grooves, reference numeral 2 denotes pre-format pits, reference numeral 3 designates the pitch between adjacent pre-grooves, and reference numeral 5 denotes recording areas. As shown, the pre-grooves I are preformed side by side, and pre-format area in which the pre-format pits 2 are formed and the recording areas 5 in which information can be additionally recorded are provided between the pre-grooves I in a direction orthogonal to the lengthwise direction of tracks. Each pre-groove I is in the form of a continuous line in the section thereof adjacent to the recording area 5, and has a discontinuous portion in the lengthwise direction of the tracks in the other section than said section. When additional recording of information is to be effected, the space between adjacent pre-grooves 1 is scanned by a light beam in such a manner that the ends of the beam spot lie on the pre-grooves I. Address information or the like is reproduced from the pre-format pits 2, and in the recording areas 5, information is recorded while tracking control of the light beam is effected in accordance with a tracking servo signal detected from the pre-groove I. The depths of the pre-grooves I and pre-format pits 2 are λ/8 and λ/4, respectively, where λ is the wavelength of the light beam. The widths of the pre-grooves and pre-format pits are of the order of 0.6 μm, and the pitch 3 between adjacent pre-grooves is 1.6 μm.

The great difference between the optical information recording medium of the present invention and the prior-art medium shown in Figure 2 is that the pre-grooves I are discontinuous in the pre-format area. Accordingly, for example, in the detection of pre-format signals or the like, the medium of the present invention is not affected by the pre-grooves I, but detection of high S/N ratio becomes possible and reliability of the read-out of important signals such as addresses is improved.

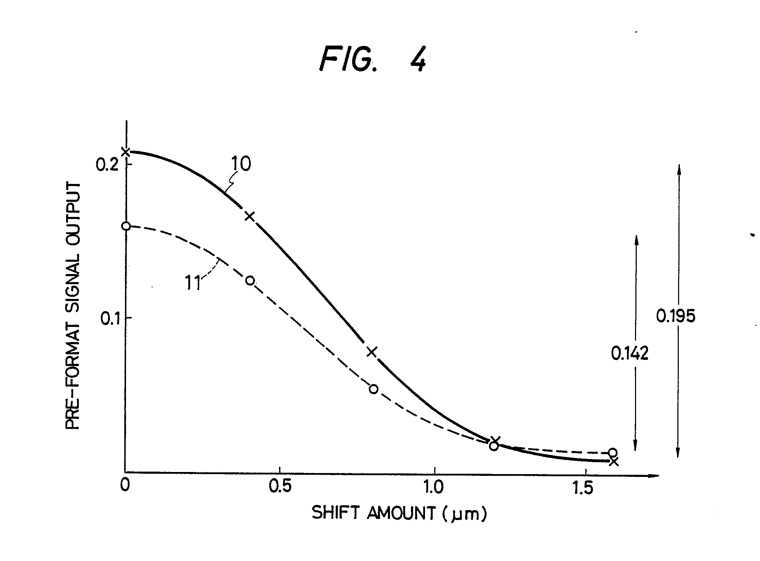

Such effect will be specifically described by reference to the experimental result shown in Figure 4.

Figure 4 is a graph showing the influence of the presence or absence of the pre-grooves I upon the amplitude of the pre-format signal by the relation of the pre-format signal output (ordinate) to the shift amount (abcissa) of the light beam.

In Figure 4, reference numeral 10 designates the curve in a case where the pre-grooves I of the present invention shown in Figure 3 are discontinuous, and reference numeral II denotes the curve in a case where the pre-grooves 21 shown in Figure 2 are continuous.

The setting of the pre-grooves I is the width of 0.6 μm and the depth of λ/8, and the setting of the pre-format pits is the pitch width of 0.6 μm, the inclination angle of 64.4° and the depth of λ/4.

As the other experimental setting, the light beam has a beam diameter of 1.5 μm∅ ($1/e^2$) and a wavelength of 835 nm, and the NA of the objective lens is NA = 0.5, and as a sample, the radius of the optical disc of 70 mm is adopted, the recording frequency is 4 MHz (duty 50%), and the number of revolutions of the disc is set to 1800 rpm. Accordingly, the length of the pit in the direction of the track is about 1.83 μm, the length of the portion in which there is no pit is also about 1.83 μm, and one cycle is about 3.66 μm. The above experimental settings may be arranged in order as shown in Tables I and 2 below.

## Table 1

|  | Tracking pre-grooves | Pre-format section |
|---|---|---|
| Width (μm) | 0.6 | 0.6 |
| Depth (nm) | λ/8 | λ/4 |
| Inclination angle (deg) | – | 64.4 |

## Table 2

| Track position | γ = 70 mm |
|---|---|
| Number of revolution of disc | 1800 rpm |
| Recording frequency | 4 MHz (dutly 50%) |
| Diameter of reading beam | 1.5 μm ($1/e^2$) |
| Wavelength of beam | 835 nm |
| N.A. of objective lens | 0.5 |

The shift amount of the light beam represented by the abscissa in Figure 4 is the peak-to-peak value of the signal amplitude read out by a light beam of 1.5 μm∅ scanning the vicinity of the pit in the pre-format area on the medium as said sample and tracing the pre-format signal in the direction of the tracks.

4

As seen from Figure 4, where the pregrooves 1 are absent on both sides of the pre-format area, the read-out signal output amplitude L $_{p-p}$ corresponding to the intensity of the light indicated by 10 (the difference between the location in the pre-format area at which the pit is present and the location in the pre-format area at which the pit is absent) is 0.195, and on the other hand, where the pre-grooves 21 are present on both sides of the pre-format area, the read-out signal output amplitude $L_{p-p}$ corresponding to the intensity of the light indicated by 11 is 0.142.

Accordingly, the former is increased by about 40% in signal amplitude as compared with the latter, and an improvement of about 3 dB in signal amplitude is obtained.

Further, the quantity of light diffracted by the pre-grooves 1 on both sides of the pre-format area is increased in the worst case due to the manufacture error (of the order of $\pm$ 0.1 $\mu$m) of track pitch 1.6 $\mu$m and therefore, the read-out signal output $L_{p-p}$ further decreases below the aforementioned 0.142, thus resulting in reduced reliability of address signals or the like.

Also, during the reading-out of the pre-format signal, it is necessary to take into account the influence as high frequency noise imparted to the read-out signal by the presence of the minute structure of the pre-grooves (having a width of 0.6 $\mu$m and a depth of $\lambda$/8), and in this respect also, the optical information recording medium of the present invention is superior to the example of the prior art.

The influence upon the tracking servo system caused by the fact that the pre-grooves are discontinuous as in the present invention will now be considered.

The data capacity of the pre-format are includes a preamble, address marks, addresses, a check byte, a postamble, etc., and is generally of the order of 50 bytes even if a plurality of address portions are provided to improve reliability. On the other hand, if the net data capacity is 1 KB/sector, the actual recorded data on the tracks will be about 1.2KB/sector or the assumption that a prolix signal of E.C.C. (error correcting code) re-synchronization is added by about 20%.

Asssuming that the modulation recording system is identical in the pre-format area and the data recording area, the rate occupied in one section of the pre-format area is about 50B/1250B$\approx$4%. Also, about fifteen sectors on a track can be secured on an optical disc of 13 cm$\emptyset$ during constant angle velocity (CAV) rotation and therefore, assuming that the number of revolutions of the disc is 1800 rpm, the time required for one revolution of the disc is 33 msec. and the passage time of one sector period is 2.2 msec. Consequently, the pre-format passage time is 2.2 msec. $\times$ 4/100$\approx$90 $\mu$sec. Accordingly, the influence imparted to the tracking servo signal is a signal-lacking period of the order of 90 $\mu$sec.

If the optical disc is rotated at 1800 rpm, the disturbance of 30 Hz by the eccentricity of the disc becomes maximum as the frequency characteristic of the tracking servo, and assuming that the amount thereof is $\pm$ 100 $\mu$m and the desired accuracy of tracking $\pm$ 0.1 $\mu$m, a servo gain of 60 dB becomes necessary for 30 Hz. The frequency characteristic of the tracking actuator -12 dB/octave (double frequency) and -40 dB/decade (ten times frequency) for the secondary and therefore, the cut-off frequency is 960 Hz. Actually, again and phase margin are required and therefore, if the servo gain is 72 dB for 30 Hz, the cut-off frequency is about 2 kHz.

Where the tracks are traced by the servo characteristic as described above while balancing is effected by the zero method using a differential, the detecting lights entering a differential tracking sensor divided into two are usually balanced. Accordingly, the aforementioned lack of the pregrooves of 90 $\mu$sec. in the pre-format area is the same as that during the idea balance control because the lights entering the differential tracking sensor balance each other by the diffracted light of the pre-format signal and thus the differential output of differential tracking sensor is 0. In this sense, the aforementioned lack does not provide any disturbance to the servo system. However, if the period of this lack lasts long, there will be no tracking signal and therefore, control will become impossible, but 90 $\mu$sec. is a very short time as viewed from the response of the servo system and can therefore be neglected as a disturbance element. That is, if the pre-grooves are in the form of continuous lines in at least the section adjacent to the recording area, the tracking control when information is recorded can be accurately accomplished even if the pre-grooves have discontinuous portions.

In the embodiment describe previously, there has been shown an example in which no pre-groove is formed in the section adjacent to the pre-format area, but as a modification thereof, design may be made such that there are discontinous portions only in the other section than the section adjacent to the recording area, that is, there are portions in which pre-grooves are formed parallel to each other at a certain interval on both sides of the pre-format pit.

The format of the medium of the present invention as described above is such that the pre-format pit and the racking pre-grooves on one side can be formed at a time by a cutting machined using a conventional double beam.

5

In the case of the CAV type optical disc as described previously, the discontinuous pre-groove portions on both sides of the pre-format area can be provided side by side in a direction perpendicular to the lengthwise direction of the tracks. However, in the other format types such as the constant linear velocity (CLV) type, the modified-MCLV type and the modified-MCAV type, the number of sectors per track differs and therefore, in some tracks (boundary tracks) of the optical disc, there may be a case where one of the tracking pre-grooves on both sides of the pre-format area remains.

The effect of the present invention is lost only in such tracks, but decoding is possible as in the prior art even if the format read-out signal level is reduced, and it is correspondingly advantageous that many other tracks are increased in the read-out signal level by the present invention.

Also, the influence imparted to the tracking servo system is momentary (disturbance of the order of 90 μsec.) and can thus be neglected. If the peak pulse is so great as to impart an influence as disturbance noise, slew rate damping can be exerted on a servo amplifier to substantially eliminate any pulse-like noise, thereby solving the influence.

The present invention is not restricted to the above-described embodiment, but various modifications thereof are possible.

For example, the tracks for tracking are not limited to the aforedescribed pre-grooves, but tracks of projection-like or other structure may be adopted if they actually provide guide means for tracking.

Also, where the present invention is applied to an optical disc, it is of course applicable to both of spiral tracks and concentric tracks, and it is apparent that the present invention is also applicable to a recording medium having straight tracks, such as an optical card or the like.

## Claims

1. An optical imformation recording medium on which tracking tracks for detecting tracking signals are preformed side by side and which has a pre-format area pre-carrying pre-format signals and a recording area in which additional recording of information is possible, between said tracking tracks in a direction perpendicular to the lengthwise direction of the tracks, characterized in that said tracking tracks are in the form of continuous lines in at least the section thereof adjacent to said recording area and have portions discontinuous in the lengthwise direction of the tracks in the other section than said section.

2. An optical information recording medium according to Claim 1, wherein said discontinuous portion of said tracking tracks are disposed side by side in a direction perpendicular to the lengthwise direction of the tracks.

3. An optical information recording medium according to Claim I, wherein said tracking tracks are in the form of grooves.

4. An optical information recording medium according to Claim 3, wherein the depth of said grooves is set to 1/8 of the wavelength of a light applied to said medium.

5. An optical information recording medium according to Claim 1, wherein said pre-format signals are recorded as an arrangement of pits.

6. An optical information recording medium according to Claim 5, wherein the depth of said pits is set to 1/4 of the wavelength of a light applied to said medium.

7. An optical information recording medium according to Claim 1, wherein said medium is in the form of a disc and said tracking tracks are formed spirally or concentrically on the surface of said disc.

8. An optical information recording medium wherein areas (5) for receiving information to be recorded are between pre-recorded tracking signals and including pre-format signals recorded on the medium, characterised in that the tracking signals are discontinuous and the pre-format signals (2) are recorded in the areas (5), which otherwise are for receiving the said information, in the zones of discontinuity.

# FIG. 1
## PRIOR ART

# FIG. 2
## PRIOR ART

# FIG. 3

# *FIG.* 4